# FASCICULE DE BREVET EUROPEEN

(11) **EP 0 512 877 B1**
(45) Date de publication et mention de la délivrance du brevet: **14.08.1996**
(21) Numéro de dépôt: 92401016.8
(22) Date de dépôt: 10.04.1992
(51) Int. Cl.: B29C 47/12, B29D 28/00

(54) **Procédé et dispositif pour la fabrication continue de films ou feuilles en matière thermoplastique et de structure lacunaire**
Verfahren und Vorrichtung zum kontinuierlichen Herstellen thermoplastischer Filme und Blätter mit Netzstruktur
Method and apparatus for the continuous manufacturing of thermoplastic films or sheets with a net structure

(30) Priorité: 10.04.1991 FR 9104367
(43) Date de publication de la demande: 11.11.1992
(73) Titulaire: S A M E X, F-72600 Saint Vincent des Pres (FR)
(72) Inventeur: Hureau, Jacques, F-72600 Mamers (FR)
(74) Mandataire: Wagret, Frédéric Cabinet Wagret Consultants

(56) Documents cités:
- EP-A- 0 213 986
- EP-A- 0 383 664
- DE-A- 1 800 747
- FR-A- 2 098 407
- FR-A- 2 159 189
- FR-A- 2 347 171
- FR-A- 2 349 432
- FR-A- 2 407 812
- FR-A- 2 552 013
- US-A- 3 947 174

## Description

La présente invention concerne le domaine de la fabrication des films ou feuilles en matière thermoplastique et de structure lacunaire formant des filets ou grillages.

On connaît de nombreux procédés et dispositifs pour la production de parois ou feuilles de structure lacunaire en matière synthétique, notamment thermoplastique, et dans lesquels le film de matière synthétique extrudé selon une structure continue est soumis, à la sortie de la tête de filière, circulaire ou rectiligne, à une interruption dans l'écoulement de la matière par déplacement devant la fente d'extrusion d'organes discontinus tels que dents ou peignes, les interruptions dans l'écoulement de la matière formant des solutions de continuité dans le film extrudé et permettant d'obtenir une feuille lacunaire constituant un grillage ou filet. Un tel procedé est decrit dans le brevet FR-A-2.552.013.

Lorsque la tête de filière est refermée sur elle-même, notamment selon une forme circulaire, on transforme généralement la structure tubulaire ainsi obtenue par sectionnement selon une génératrice pour réaliser une feuille plane.

Il est connu de provoquer un accroissement dimensionnel de la feuille plane ainsi réalisée par une opération d'étirement postérieure.

A cet effet, la feuille constituant un grillage ou un filet est réchauffée jusqu'à une température de ramollissement de la matière thermoplastique et elle est alors soumise à une traction notamment longitudinale, de façon à provoquer un étirement et un accroissement dimensionnel dans le sens de la traction des brins longitudinaux qui sont ainsi allongés et restent réunis par les brins transversaux.

Cet étirement présente l'avantage de provoquer une réorientation moléculaire par alignement parallèle des longues chaînes du polymère constituant la résine de synthèse notamment thermoplastique formant la matière du grillage ou filet.

Cette réorientation et cet alignement parallèle des molécules du polymère permettent d'obtenir un renforcement des brins et généralement de la feuille dans le sens de l'étirement.

On peut procèder également dans certains cas à un étirement biaxial non seulement longitudinal selon l'axe d'avancement de la feuille extrudée, mais dans le sens transversal, comme decrit dans le brevet publié DE-A-1 800 747.

Cependant l'étirement de la feuille connaît des limites dans son efficacité en raison de la présence, aux points de jonction des brins respectivement longitudinaux et transversaux, d'une surépaisseur.

Cette surépaisseur est produite lors de l'extrusion et elle correspond à un afflux de matière sur les bords des zones évidées, la matière thermoplastique, fluant sous pression vers l'extérieur, hors de la fente d'extrusion, ayant tendance, lorsqu'elle rencontre l'obstacle des organes d'interruption tels que les dents, couteaux crantés, peignes etc..., à se reporter sur les zones latérales, là où l'écoulement est resté libre.

Il en résulte par conséquent précisément aux points de jonction des brins longitudinaux (et correspondant à l'écoulement continu de la matière) et transversaux (correspondant aux zones où l'écoulement est interrompu) une surépaisseur qui représente par conséquent une discontinuité dans la résistance à la traction, ce qui est souligné dans le brevet publié FR-A-2.098-407.

Dès lors, lors de la phase d'étirement les points de jonction entre les brins longitudinaux et les brins latéraux, correspondant à une zone plus épaisse, résistent à la force d'étirement à laquelle cèdent au contraire les brins longitudinaux.

Ce gradient dans les résistances à la traction provoque par conséquent un étirement préférentiel et limité aux brins longitudinaux.

Il n'est pas possible de remédier à cette localisation de l'étirement en accroissant la force de traction, car cette dernière s'exerçant toujours préférentiellement sur les brins longitudinaux aboutira finalement à un allongement excessif de ces brins, pouvant aller jusqu'à une rupture, sans pour autant engendrer une modification dimensionnelle des zones de jonction en surépaisseur.

Cet inconvénient se retrouve lors de la vie et de l'utilisation du grillage ou du filet ainsi réalisé et dans lequel le passage du brin longitudinal étiré à la zone de surépaisseur correspondant à un point de jonction non étiré constitue un point de faiblesse en raison de la discontinuité dans la structure moléculaire (les brins longitudinaux présentant une structure orientée, tandis que la masse de la zone de jonction a conservé une structure indifférenciée ou en toute hypothèse non orientée) ; de plus la zone de surépaisseur tire sa résistance de la masse de matière qui contraste avec la section réduite du brin étiré.

Cette structure et cette discontinuité entre le brin étiré et le point de jonction non étiré est une cause essentielle de fragilité de tous les produits constitués de grillage ou filet ayant subit l'étirement et l'on constate notamment sur les bancs de traction que la rupture se produit de préférence à la limite des brins de jonction.

Or, il apparaît souhaitable de pouvoir réaliser, notamment dans de nombreuses applications, une structure lacunaire présentant une résistance à la traction (après étirement) uniforme et régulière, répartie sur l'ensemble de la surface de la structure lacunaire.

L'invention permet de remédier aux inconvénients qui ont été précédemment décrits et de réaliser une structure lacunaire, notamment un grillage ou filet, comportant, après l'opération d'étirement, une uniformité longitudinale dans la résistance à la traction en évitant ainsi la formation de points préférentiels de faiblesse notamment au niveau de la jonction entre les brins longitudinaux étirés et les brins transversaux.

A cet effet, l'invention concerne un procédé pour la production de parois ou feuilles de structure lacunaire formant des grillages ou filets, en matière synthétique notamment thermoplastique, tel que defini dans la revendication 1 qui suit. L'invention concerne egalement une installation et telle que definie dans la revendication 2.

L'invention concerne également une feuille ou film de matière synthétique notamment thermoplastique comportant une structure lacunaire et obtenu par la mise en oeuvre du procédé selon les caractéristiques de la revendication 1, le film lacunaire ayant été extrudé avec interruption locale et momentanée du flux de matière plastique et après passage dans un couloir de stabilisation d'épaisseur correspondant à la largeur de la fente d'extrusion, puis soumis à un étirement notamment longitudinal.

Plus spécialement le film de structure lacunaire comporte, après étirement, une épaisseur égale sur toute sa surface, sans discontinuité et en évitant ainsi la formation d'un point préférentiel de rupture.

D'autres caractéristiques et avantages de l'invention ressortiront de la description qui suit et qui est donnée en rapport avec une forme de réalisation préférentielle présentée à titre d'exemple et en se référant aux dessins annexés.

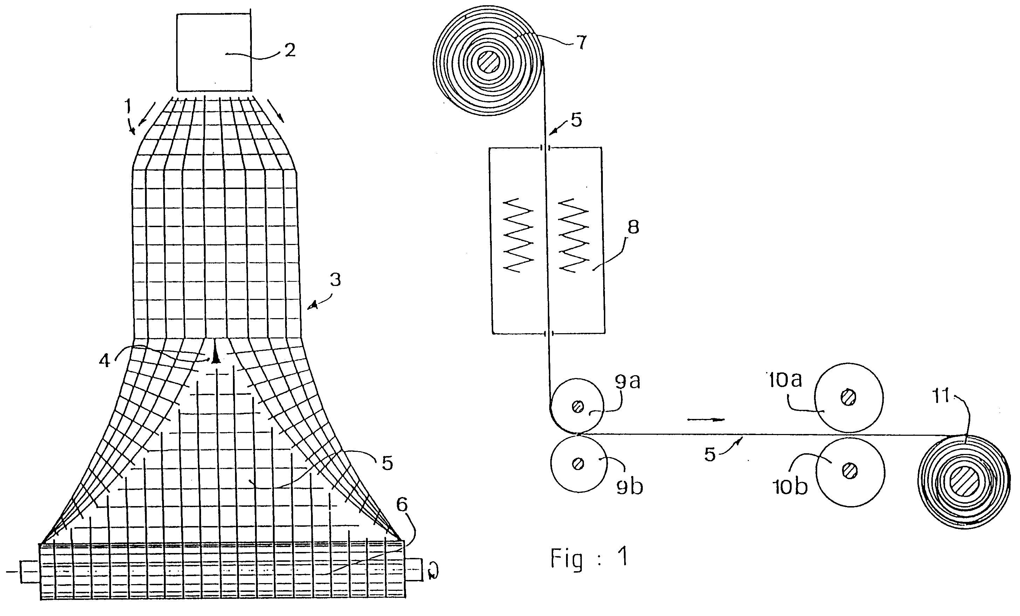

La Figure 1 est une vue schématique montrant les phases successives de mise en oeuvre de l'invention.

Les Figures 2a et 2b montrent des vues d'une structure lacunaire réalisée selon l'art antérieur et représentée avant étirage (Figure 2a) et après étirage (Figure 2b).

Les Figures 3a et 3b représentent une vue d'une structure lacunaire réalisée conformément à l'invention et représentée avant étirage (Figure 3a) et après étirage (Figure 3b).

Les Figures 4 et 5 représentent deux variantes de réalisation d'une tête de filière et d'extrusion réalisée en vue de la mise en oeuvre du procédé et du dispositif de l'invention.

Selon l'ensemble des Figures, on voit que le procédé et le dispositif mis en oeuvre utilisent l'extrusion d'une structure lacunaire 1 à partir d'une tête d'extrusion 2 comportant, de façon connue en soi, des peignes, couteaux, cloches crantés ou dents qui interrompent momentanément le flux et l'écoulement de la matière plastique extrudée pour réaliser des évidements conformant ainsi une structure lacunaire 1.

Celle-ci passe sur un conformateur et dans l'exemple réalisé elle constitue une structure tubulaire ; cette dernière est avantageusement immergée dans un bac de refroidissement (non représenté), et dans le cas, ici considéré, où l'on veut obtenir une nappe ou feuille continue, elle est appelée à défiler sur un couteau 4 qui ouvre le tube selon une directrice pour conformer ainsi une feuille ou nappe sans fin 5 laquelle est enroulée en 6.

La feuille enroulée 6 est ensuite avantageusement déroulée depuis un tambour d'appel 7 et, après passage dans une chambre de réchauffement 8 dans laquelle la feuille défilant en continu atteint une température proche de la température de refroidissement, la feuille défile entre les calandres 9a, 9b tournant à une première vitesse, cette même feuille 5, à sa température de ramollissement, est appelée par les tambours 10a, 10b entraînés à une vitesse périphérique supérieure à la vitesse des calandres 9a, 9b de sorte que l'entraînement de la feuille provoque un étirement entre les tambours 10a, 10b d'une part et les calandres 9a, 9b d'autre part ; étirement provoquant un allongement dimensionnel, selon l'axe d'avancement de la feuille, correspondant à l'axe de la traction, et la feuille ainsi étirée est alors stockée sur le tambour 11.

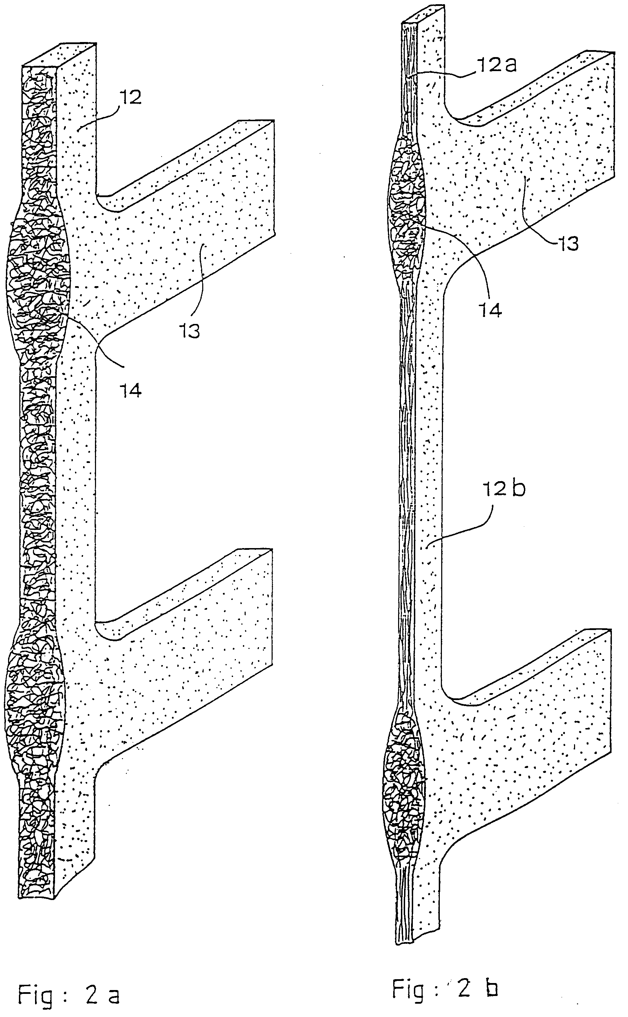

Selon les dispositions de l'art antérieur, la feuille ajourée constituant un grillage ou un filet comporte, au niveau de l'intersection des brins longitudinaux 12 et des brins transversaux 13 (Figures 2a et 2b), une nodosité ou bourrelet 14 .

Après étirement, les brins longitudinaux 12a, 12b ont été allongés et ont gagné en longueur tout en perdant en épaisseur et en largeur, les brins transversaux 13 étant peu affectés comme n'ayant pas subi de traction.

Les points de rencontre 14 entre les brins longitudinaux et les brins transversaux offrent quant à eux, en raison de leur surépaisseur, une résistance qui s'oppose à un effet d'étirement important, la traction s'exerçant à un titre préférentiel sur les brins longitudinaux 12a, 12b etc...

Au niveau de ces brins et comme on l'a représenté schématiquement sur la Figure 2b, les longues chaînes de molécules des polymères ou copolymères qui composent la résine, ont pris une direction sensiblement parallèle et longitudinale correspondant précisément à l'effet d'étirement procurant une orientation moléculaire de la matière ; tandis qu'au niveau des bourrelets ou des surépaisseurs 14 l'effet d'étirement peu accentué n'a pas modifié sensiblement la structure et la conformation interne de la résine.

On voit que l'on aboutit ainsi à une discontinuité dans le sens longitudinal entre les brins 12a, 12b d'une part et les surépaisseurs 14 en créant ainsi, au niveau des zones indiquées par les flèches sur la Figure 2b, des pointes de faiblesse liées d'une part à la discontinuité en la structure de la matière et d'autre part au fait que la surépaisseur 14 continue à opposer une résistance plus importante

De sorte que si les brins 12b, grâce à la réorientation moléculaire, bénéficient en leur sein d'une bonne résistance à la traction, la discontinuité entre le brin 12b et la surépaisseur 14 continue d'offrir une zone de faiblesse au niveau de laquelle se produit la rupture dans le cas d'une traction dépassant une certaine valeur.

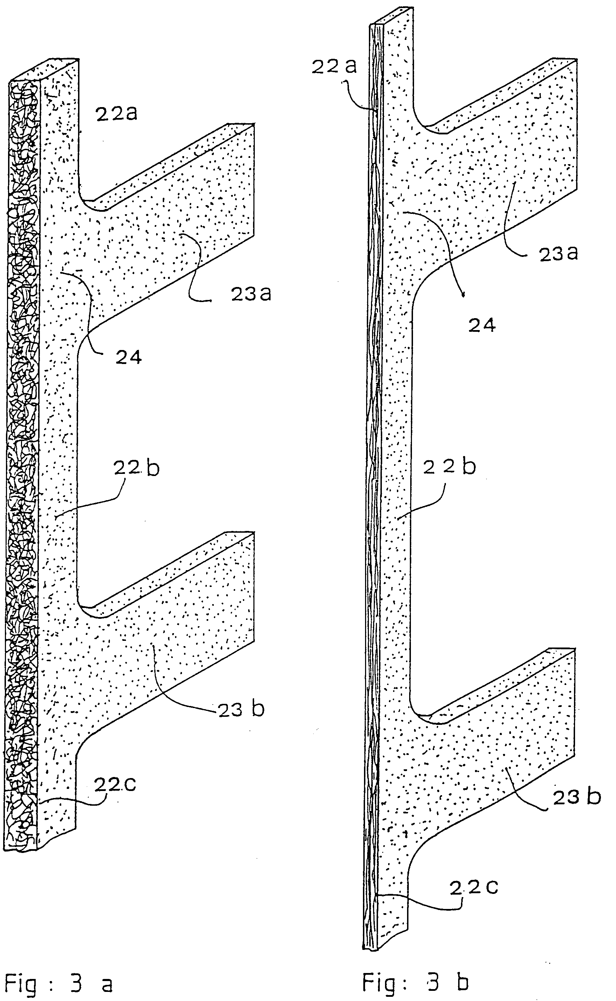

L'invention vise à éviter ce phénomène et permet de réaliser une structure lacunaire possédant la conformation telle que illustrée aux Figures 3a et 3b.

Et grâce au dispositif intégré dans la filière d'extrusion et qui sera ci-après décrit, on obtient une structure lacunaire dans laquelle le point de rencontre 24 entre les brins transversaux 23a, 23b et des brins longitudinaux 22a, 22b, 22c, ne comporte plus aucune surépaisseur.

Dans ces conditions après l'effet de traction exercé longitudinalement et ou transversalement, selon l'exemple ici considéré, on obtient une structure telle que illustrée à la Figure 3b dans laquelle les brins longitudinaux 22a, 22b ont été étirés non seulement dans leur zone libre mais également dans la zone intermédiaire correspondant à la zone de jonction 24 dans laquelle les bras longitudinaux rejoignent les brins transversaux 23a, 23b.

En effet, en l'absence de surépaisseur au niveau de ce point de croisement la traction peut se répartir sur toute la longueur des brins longitudinaux et provoquer ainsi le phénomène d'étirement provoquant, ainsi que représenté schématiquement sur la Figure 3b, un positionnement parallèle des chaînes moléculaires des polymères composant la résine.

Dans ces conditions, la résistance à la traction est continue tout au long des brins longitudinaux sans discontinuité sensible.

Dès lors, en cas de traction importante exercée sur la structure lacunaire, cet effort se répartit sur toute la longueur sans rencontrer un point singulier de faiblesse dans la continuité des brins où la rupture pourrait s'amorcer de façon préférentielle.

On obtient dans ces conditions une structure lacunaire, constituant un grillage, filet présentant une résistance globale très supérieure.

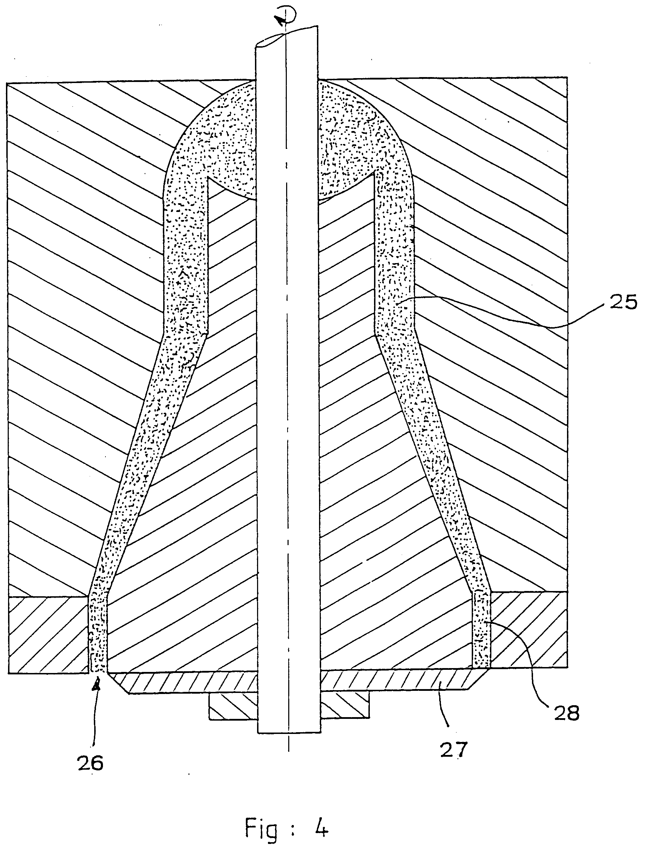

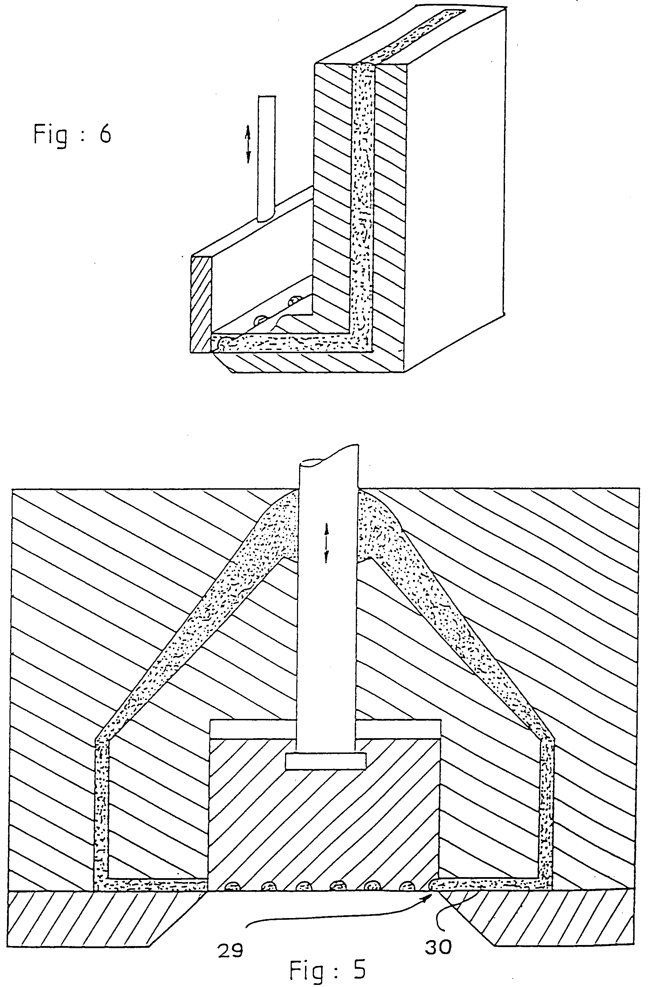

Les Figures 4 et 5 montrent deux exemples particuliers de mise en oeuvre de l'invention.

Selon la Figure 4, on a représenté une tête de filière dont le principe est connu notamment par les brevets français n° 76-12758 et 89-01827.

Dans cette forme de réalisation, la matière à l'état plastique, amenée à cet effet à une température voulue, est amenée à s'écouler dans un conduit en forme de couronne 25 jusqu'à une fente d'extrusion inférieure 26.

A ce niveau, elle rencontre un disque cranté 27 disposé transversalement par rapport au cheminement vertical de la matière extrudée, ce disque cranté ou denté étant animé d'un mouvement planétaire, tournant sur lui-même d'une part et son axe suivant un parcours circulaire, de telle sorte que une partie du disque vienne obturer, par sa périphérie dentée, la fente d'extrusion ; la zone d'obturation se déplaçant constamment et circulairement sur le pourtour de la fente d'extrusion.

On obtient, comme décrit dans le brevet français précédemment cité, une structure lacunaire dans laquelle les perforations, provoquées par l'interposition des dents sur le parcours du film extrudé, suivent une hélice.

Dans cette forme de réalisation et telle que représentée à la Figure 4, la fente d'extrusion est précédée en amont d'un couloir circulaire 28 de section identique à la section de la fente d'extrusion 26.

Et ce couloir circulaire et vertical a une longueur au moins égale à 20 fois la largeur de la fente d'extrusion et donc la largeur du couloir lui-même.

Dans ces conditions, la matière sous pression se stabilise en épaisseur par son passage en transit dans ce couloir cylindrique, les filets de matière fluide s'écoulant parallèlement selon un régime laminaire.

Dans ces conditions, on obtient grâce à cet effet de régulation et de stabilisation du fluide matière, une régulation en épaisseur du film sans que l'interposition des organes d'obturation locale et momentanée, ici les dents débordant du disque 27, provoque une perturbation dans l'écoulement de la matière qui provoquerait un report de cette dernière dans les zones de passage non interrompu, ce qui aboutirait aux surépaisseurs qui ont été précédemment évoquées.

L'écoulement de la matière à l'état fluide ayant été stabilisé en épaisseur, les filets de fluide étant tous sensiblement parallèles, on élimine ainsi la formation des nodosités ou surépaisseurs au niveau des croisements des brins longitudinaux et des brins transversaux.

Ce qui permettra pendant l'étirement de répartir l'effet d'élongation sur toute la longueur des brins longitudinaux, se situant dans l'axe de l'étirement sans créer de zone de discontinuité constituant des points de faiblesse.

La Figure 5 représente une variante de réalisation d'une tête de filière selon l'invention et dans laquelle le cheminement de la matière est prévu horizontal et en couronne dans une direction centripète.

La fente d'extrusion 29 étant ici précédée par le couloir 30 d'épaisseur rigoureusement égale à la hauteur de la fente d'extrusion et étant prévu avec une longueur minimale égale à au moins 20 fois ladite hauteur, de façon à induire un parcours laminaire du flux de matière à l'état fluide jusqu'au niveau de la fente d'extrusion.

Dans le présent exemple, les cloches crantées sont situés transversalement par rapport à la fente d'extrusion ; et comme précédemment décrit on obtient par le mouvement alternatif vertical des cloches un flux de matière qui est localement et momentanément interrompu en provoquant ainsi l'extrusion d'une feuille pourvue d'évidements.

Et comme précédemment exposé, le flux de matière s'écoulant selon un régime laminaire étant stabilisé en épaisseur, on évite la formation de bourrelets au niveau de l'intersection entre les brins longitudinaux continus et les brins transversaux.

L'invention permet de réaliser des structures lacunaires étirées, par conséquent possédant pour un poids de matière une grande surface spécifique, tout en présentant un coefficient de résistance à la traction élevé.

Ces structures lacunaires sont applicables à la réalisation de grillage utilisé notamment comme avertisseur enterré pour le repérage de canalisations ou pour signalisation dans les chantiers ; l'invention permet également de réaliser des grillages, filets utilisés comme support de protection renforcement, ou encore comme surface d'emballage ou de conditionnement.

Dans l'exemple de la figure 6, la cloche crantée est située a l'exterieur par rapport a la fente d'extrusion.

Les dessins ne donnent pas necessairement le rapport exact ci dessus defini entre la longueur du couloir laminaire et la largeur de la fente et de ce couloir, la largeur (ou l'epaisseur) du couloir et de la fente d'extrusion ayant été agrandie pour les besoins de la clarté des figures.

## Revendications

1. Procédé pour la production de grillages ou filets, en matière synthétique notamment thermoplastique, utilisés pour la signalisation, notamment comme avertisseur enterré pour le repérage de canalisation, du type dans lequel un film en matière plastique est extrudé en continu par une tête de filière, l'écoulement de la matière étant interrompu localement et par intermittence par déplacement devant la fente d'extrusion d'organes d'obturation de structure discontinue tels que couteaux crantés ou cloches crantées, dents ou peignes, pour créer des solutions de continuité dans le film constitué de brins longitudinaux se croisant avec des brins transversaux, et le procédé est caractérisé par la combinaison des points suivants :
a) on stabilise l'épaisseur du film extrudé par écoulement laminaire de la matière thermoplastique, en amont de la tête de filière, par transition dans un couloir de section constante et égale à la section de la fente d'extrusion, en évitant ainsi la formation d'inégalités de surface ou bourrelets en bordure des zones évidées du film, notamment aux points de croisement des brins longitudinaux et des brins tansversaux; la longueur du couloir correspondant à au moins 20 fois la largeur de la fente d'extrusion d'extrusion;
b) on soumet le film lacunaire ainsi extrudé et d'épaisseur constante, et amené à une température convenable proche de la température de ramollissement, à une opération d'étirement, notamment longitudinal, pour provoquer un allongement des brins étirés, en provoquant une réorientation moléculaire par alignements parallèles dans le sens de l'étirement des longues chaînes du polymère constituant la résine thermoplastique, en obtenant ainsi un grillage à haute résistance mécanique présentant une épaisseur égale sur toute sa surface.

2. Installation pour la production du film de structure lacunaire (1) et étiré selon le procédé conforme à la revendication 1, caractérisée en ce qu'elle comporte une filière constituée d'une fente d'extrusion (26) comprenant en amont de la fente (26) d'extrusion, un couloir de transition (28) de la matière thermoplastique à l'état fluide, le couloir étant de section constante et d'épaisseur égale à la largeur de la fente d'extrusion, la longueur du couloir (28) étant égale à au moins 20 fois la largeur de la fente (26) d'extrusion pour permettre un parcours rectiligne des filets de matière thermoplastique à l'état fluide jusqu'à la sortie de cette dernière par la fente d'extrusion (26), et la tête de filière comporte des organes de structure discontinue (27) en vue de l'interruption momentanée localisée du film en matière synthétique notamment thermoplastique, et constitués notamment de couteaux crantés, dents ou peignes, ces organes étant prévus et disposés pour se déplacer, de façon connue en soi, entre une position d'effacement et inactive en dehors du cheminement du film extrudé et une position active d'interruption en travers du flux, selon une direction perpendiculaire à l'écoulement du flux de matière dans le couloir extrudé et hors de la fente d'extrusion, la filière étant ainsi propre à extruder une feuille lacunaire formée de brins longitudinaux se croisant avec des brins transversaux et d'épaisseur égale sur toute sa surface sans présenter de bourrelets notamment aux points de croisement des brins longitudinaux et des brins transversaux, et en ce que l'installation comporte, en aval de la filière, des moyens de réchauffement de la nappe ou filière lacunaire jusqu'au point de ramollissement de la matière, suivis de moyens d'étirement de la nappe notamment des tambours jumelés successifs, dont deux tambours jumelés aval, appelant la nappe ou filière à une vitesse supérieure à la vitesse de passage sur les deux tambours ou calandres jumelés situés en amont.

3. Grillage obtenu par le procédé selon la revendication 1, utilisé pour la signalisation, notamment comme avertisseur enterré pour le repérage de canalisation, le grillage possédant, pour un poids de matière donné, une grande surface spécifique, un coefficient élevé de résistance à la traction et une épaisseur constante dépourvue de bourrelet.

## Claims

1. Method for the production of netting or nets of synthetic, particularly thermoplastic material, used for signalling, particularly as buried indicator for marking a pipe, of the type in which a film of plastics material is continuously extruded by an extruding head, the flow of the material being interrupted locally and intermittently by displacement in front of the extrusion slot of obturation members of discontinuous structure such as serrated cutters or serrated bells, teeth or combs, to create gaps in the film constituted by longitudinal strands intersecting with transverse strands, and the method is characterized by the combination of the following points:
a) the thickness of the film extruded by laminary flow of the thermoplastics material, upstream of the extruding head, is stabilized by transition in a corridor of constant section equal to the section of the extrusion slot, thus avoiding the formation of surface inequalities or beads on the edge of the hollowed zones of the film, particularly at the points of intersection of the longitudinal strands and of the transverse strands; the length of the corridor corresponding to at least 20 times the width of the extrusion slot for extrusion,
b) the net film thus extruded and of constant thickness, and taken to a suitable temperature close to softening temperature, is subjected to an operation of drawing, particularly longitudinal, to provoke an elongation of the drawn strands, provoking a molecular reorientation by parallel alignments in the direction of drawing of the long chains of the polymer constituting the thermoplastics resin, thus obtaining a netting with high mechanical strength presenting an equal thickness over the whole of its surface.

2. Installation for the production of the drawn film of net structure (1), in accordance with the method according to Claim 1, characterized in that it comprises a die constituted by an extrusion slot (26) comprising upstream of the extrusion slot (26) a corridor (28) for transition of the thermoplastics material in the fluid state, the corridor being of constant section and of thickness equal to the width of the extrusion slot, the length of the corridor (28) being equal to at least 20 times the width of the extrusion slot (26) to allow a rectilinear path of the nets of thermoplastics material in the fluid state up to the exit of the latter via the extrusion slot (26), and the extrusion slot comprises members of discontinuous structure (27) with a view to the localized momentary interruption of the film of synthetic, particularly thermoplastic material, and constituted in particular by serrated cutters, teeth or combs, these members being provided and disposed to move, in manner known per se, between an inactive position of retraction outside the path of the extruded film and an active position of interruption across the flux, in a direction perpendicular to the flow of the flux of matter in the extruded corridor and out of the extrusion slot, the die thus being adapted to extrude a net-type sheet formed by longitudinal strands intersecting with transverse strands and of equal thickness over the whole of its surface without presenting beads particularly at the points of intersection of the longitudinal strands and the transverse strands, and in that the installation comprises, downstream of the die, means for heating the web or net-type die up to the point of softening of the matter, followed by means for drawing the web, particularly successive twinned drums, including two downstream twinned drums, pulling the web or die at a speed greater than the speed of passage on the two twinned drums or calenders located upstream.

3. Netting obtained by the method according to Claim 1, used for signalling, particularly as buried indicator for marking a pipe, the netting presenting, for a given weight of matter, a large specific surface, a high coefficient of tensile strength and a constant thickness bereft of bead.

## Patentansprüche

1. Verfahren zum kontinuierlichen Herstellen thermoplastischer Filme und Blätter mit Netzstruktur für Signalisierungszwecke, insbesondere als unterirdische Anzeigeeinrichtung zur Markierung von Leitungsanlagen, bei dem ein Kunststoffilm mittels eines Strangpreßkopfs kontinuierlich extrudiert wird, wobei der Materialfluß in der Weise lokal und intermittierend unterbrochen wird, daß man vor dem Extrusionsspalt Verschlußorgane einer diskontinuierlich ausgebildeten Art, wie zum Beispiel gerippte Messer oder gerippte Glocken, Zacken oder Kämme bewegt, um dem Film eine zusammenhängende Struktur derart zu verleihen, daß sich Längsfäden mit Querfäden kreuzen, wobei das Verfahren gekennzeichnet ist durch die Kombination der folgenden Schritte:
a) Man stabilisiert die Dicke des durch den laminaren Austrag des thermoplastischen Materials extrudierten Films dadurch, daß das Material vor Erreichen des Extrusionskopfs einen Abschnitt konstanten und dem Querschnitt des Extrusionsspalts gleichen Querschnitts durchläuft, wodurch die Ausbildung von Oberflächenungleichmäßigkeiten oder Wulsten an den Kanten der ausgesparten Filmbereiche, insbesondere an den Kreuzungspunkten der Längs- und Querfäden, vermieden wird, wobei die Länge des Abschnitts mindestens dem zwanzigfachen Wert der Breite des Extrusionsspalts entspricht;
b) man unterwirft den auf diese Weise extrudierten netzartigen Film konstanter Dicke, nachdem er auf eine geeignete Temperatur in der Nähe der Erweichungstemperatur gebracht wurde, einem Streckvorgang, insbesondere in Längsrichtung, um eine Verlängerung der gestreckten Fäden dadurch zu bewirken, daß durch paralleles Ausrichten der langen Ketten des das thermoplastische Harz bildenden Polymers in Streckrichtung eine molekulare Umorientierung bewirkt wird, so daß man auf diese Weise ein Gitter hoher mechanischer Festigkeit mit über seine gesamte Fläche hinweg gleicher Dicke erhält.

2. Vorrichtung zum Herstellen des gemäß dem Verfahren nach Anspruch 1 erzeugten Films mit Netzstruktur (1), gekennzeichnet durch ein Extrusionsmundstück, bestehend aus einem Extrusionsspalt (26) mit einem dem Extrusionsspalt (26) vorgeschalteten Übergangsabschnitt (28) für das im flüssigen Zustand befindliche thermoplastische Material, wobei der Abschnitt einen konstanten Querschnitt aufweist, dessen Dicke gleich der Breite des Extrusionsspalts ist, und wobei die Länge des Abschnitts (28) mindestens gleich dem zwanzigfachen Wert der Breite des Extrusionsspalts (26) ist, um einen geradlinigen Durchgang der noch im flüssigen Zustand vorliegenden thermoplastischen Filme bis zum Austritt aus dem Extrusionsspalt zu ermöglichen, und wobei der Extrusionskopf Elemente mit diskontinuierlicher Struktur (27) umfaßt, mittels derer der aus dem Kunststoff, insbesondere dem thermoplastischen Kunststoff, bestehende Film lokal und kurzzeitig unterbrochen werden kann und die insbesondere aus gerippten Messern, Zähnen oder Kämmen bestehen und derart vorgesehen und angeordnet sind, daß sie in an sich bekannter Weise zwischen einer zurückgezogenen und inaktiven Stellung außerhalb der Bewegungsbahn des extrudierten Films und einer aktiven Unterbrechungsstellung innerhalb der Bewegungsbahn quer zum Materialfluß innerhalb des Extrusionsweges, aber außerhalb des Extrusionsspalts, hin- und herbewegt werden können, so daß der Extrusionskopf auf diese Weise in der Lage ist, ein aus Längsfäden, die sich mit Querfäden kreuzen, bestehendes Blatt mit Netzstruktur und über seine gesamte Fläche hinweg gleicher Dicke zu erzeugen, ohne daß dieses Wulste, insbesondere an den Kreuzungspunkten der Längsfäden mit den Querfäden, aufweist, und ferner gekennzeichnet durch dem Extrusionskopf nachgeschaltete Mittel zum Wiedererwärmen des Films oder Netzes bis zum Wiedererweichungspunkt des Materials mit nachgeschalteten Mitteln zum Strecken des Films, bestehend insbesondere aus aufeinanderfolgenden Walzenpaaren, wobei das nachfolgende Walzenpaar den Film bzw. das Netz mit einer höheren Geschwindigkeit abzieht als der, mit der der Film bzw. das Netz das vorgeschaltete Walzenpaar bzw. die vorgeschalteten Kalander passiert.

3. Gemäß dem Verfahren nach Anspruch 1 hergestelltes Netz für Signalisierungszwecke, insbesondere als unterirdische Anzeigeeinrichtung zur Markierung von Leitungsanlagen, wobei das Netz bei einem gegebenen Materialgewicht eine große spezifische Oberfläche, einen hohen Zugwiderstandskoeffizienten und eine gleichmäßige Dicke ohne alle Wulste aufweist.
